# FASCICULE DE BREVET EUROPEEN

(11) **EP 4 627 400 B1**
(45) Date de publication et mention de la délivrance du brevet: **21.01.2026**
(21) Numéro de dépôt: 25702149.3
(22) Date de dépôt: 21.01.2025
(51) Int. Cl.: G02B 7/183, G02B 23/16, B64G 1/22

(54) **SYSTÈME OPTO-MÉCANIQUE DÉPLOYABLE COMPACT**
KOMPAKTES EINSETZBARES OPTOMECHANISCHES SYSTEM
COMPACT DEPLOYABLE OPTO-MECHANICAL SYSTEM

(30) Priorité: 26.01.2024 FR 2400598
(43) Date de publication de la demande: 08.10.2025
(73) Titulaire: Airbus Defence and Space SAS, 31402 Toulouse Cedex 4 (FR)
(72) Inventeur: ARCHER, Julien, 31402 Toulouse cedex 4 (FR); TAJAN, Florent, 31402 Toulouse cedex 4 (FR)
(74) Mandataire: Santarelli
(86) Numéro de dépôt international: PCT/EP2025/051434
(87) Numéro de publication internationale: WO 2025/157796

(56) Documents cités:
- US-A1- 2019 265 435
- US-A1- 2023 339 626
- SCHWARTZ NOAH ET AL: "6U CubeSat deployable telescope for optical Earth observation and astronomical optical imaging", PROCEEDINGS OF THE SPIE, SPIE, US, vol. 12180, 27 August 2022 (2022-08-27), pages 1218031 - 1218031, XP060162665, ISSN: 0277-786X, ISBN: 978-1-5106-5738-0, DOI: 10.1117/12.2627248

## Description

### Domaine technique

La présente demande concerne un système opto-mécanique, tel qu'un télescope, destiné à être embarqué dans un engin spatial. Un tel système est utilisé notamment dans le cadre de missions spatiales d'observation de la Terre.

### Art antérieur

On connait les télescopes comprenant un miroir primaire de grandes dimensions configuré pour renvoyer et concentrer les rayons perçus vers un miroir secondaire de moindre dimension, qui lui-même renvoie les rayons reçus vers un capteur photosensible.

On cherche en général à proposer des systèmes opto-mécaniques contraints en termes de masse et de volume notamment pour réduire leur coût de lancement.

Le brevet US2015/0146288 au nom de Utah State University Research Foundation intitulé « Multiple petal deployable telescope » divulgue un télescope déployable comprenant un miroir primaire sous forme de plusieurs pétales pouvant être mus entre une position rabattue de stockage et une position déployée de fonctionnement. Un tel télescope est cependant complexe et en outre sa précision est limitée. Le document US2023/339626 divulgue également un télescope déployable.

Il apparaît ainsi le besoin d'améliorer la précision de ce type de télescope déployé en orbite, tout en permettant de répondre à des exigences en termes de réduction de masse et de volume.

### Exposé de l'invention

L'invention vise à pallier au moins l'un des inconvénients susmentionnés, en proposant un système opto-mécanique à la fois moins complexe et plus performant.

L'invention propose un système opto-mécanique pour un engin spatial, comprenant un châssis, un miroir primaire comportant une pluralité de pétales, un miroir secondaire et un capteur photosensible configuré pour recueillir les rayons réfléchis par les miroirs primaire et secondaire, chacun des pétales ayant une face miroir et une face arrière, le miroir secondaire ayant une face miroir et une face arrière, le miroir secondaire étant monté sur une plateforme secondaire, chacun des pétales étant monté sur une plateforme primaire individuelle déployable par rapport au châssis entre une configuration repliée de stockage et une configuration déployée de fonctionnement, les faces miroir des pétales étant configurées pour concentrer les rayons réfléchis vers le miroir secondaire dans la configuration déployée de fonctionnement.

Le système opto-mécanique selon l'invention est caractérisé en ce que :
- le châssis comprend un pilier creux ajouré délimitant un volume central libre,
- chaque plateforme primaire ou chaque miroir primaire, en configuration repliée de stockage, est solidarisé audit pilier creux ajouré par au moins un premier mécanisme de gerbage,
- le pilier creux ajouré comprend au moins trois barreaux longitudinaux répartis autour du volume central libre, chacun desdits barreaux présentant une base et un sommet,
- les sommets des barreaux portent des éléments de liaison avec la plateforme secondaire,
- le miroir secondaire est positionné au-delà des sommets des barreaux dans un volume délimité par des droites venant dans le prolongement des barreaux, au moins dans la configuration déployée de fonctionnement,
- la plateforme secondaire est déployable par rapport au châssis entre sa configuration repliée de stockage et sa configuration déployée de fonctionnement, et les éléments de liaison entre le châssis et la plateforme secondaire (6) comprennent trois bras (16), dont deux bras rigides (16A, 16B) et un bras pliable (16C), qui forment, en position déployée, un trépied supportant la plateforme secondaire (6), chacun des trois bras ayant une extrémité inférieure reliée au châssis par une charnière inférieure (161) définissant une liaison pivot inférieure et une extrémité supérieure reliée à la plateforme secondaire (6) par une charnière supérieure (162) définissant une liaison pivot supérieure, le bras pliable ayant de plus une articulation intermédiaire (163) entre ses extrémités inférieure et supérieure définissant une liaison pivot intermédiaire, le miroir secondaire (5) ou sa plateforme secondaire (6), dans la configuration repliée de stockage, étant rabattu face au pilier creux ajouré et solidarisé au pilier creux ajouré par au moins un second mécanisme de gerbage,
- le châssis comprend un socle (11) sur lequel le pilier creux ajouré est fixé, lequel socle présente une ouverture (110) à l'endroit de ladite zone de concentration des rayons lumineux, le système opto-mécanique comprenant, sur ledit socle à l'opposé du miroir secondaire (5), un miroir tertiaire (18) ayant un axe focal tertiaire et un miroir de déviation (17) configuré pour recevoir les rayons partant du miroir secondaire et pour dévier ces rayons vers le miroir tertiaire, le capteur photosensible (19) étant agencé sur l'axe focal tertiaire pour capter les rayons renvoyés par le miroir tertiaire.

Selon une particularité de l'invention, les pétales, dans la configuration déployée de fonctionnement, sont disposés chacun en face d'un jour entre deux barreaux consécutifs du pilier creux ajouré qui est configuré pour que les rayons réfléchis par chacun des pétales vers le miroir secondaire ne rencontrent pas le pilier creux ajouré, les rayons lumineux réfléchis par le miroir secondaire étant dirigés vers une zone de concentration des rayons lumineux disposée entre les bases des barreaux.

Selon une autre particularité de l'invention, les pétales sont au moins au nombre de trois, trois axes de pivotement desdits pétales étant disposés selon un triangle équilatéral, de sorte que lesdits trois pétales sont agencés autour d'un axe central du système opto-mécanique à 120°C les uns des autres.

Selon une autre particularité de l'invention, chacun des pétales présente une projection rectangulaire ou carrée dans un plan orthogonal à son axe focal primaire, les bases des barreaux étant disposées de sorte que des droites tangentes aux bords latéraux des pétales, dans la configuration déployée, passent entre les barreaux.

Selon une autre particularité, le système opto-mécanique selon l'invention comprend en outre des actionneurs de positionnement nanométrique disposés dans les plateformes primaires et dans la plateforme secondaire pour le réglage de l'orientation et de la position de chacun des pétales et du miroir secondaire.

Selon une autre particularité de l'invention, les actionneurs de positionnement nanométrique de chacun des pétales sont constitués par au moins trois actionneurs nanométriques linéaires venant en appui sur la face arrière dudit pétale et les actionneurs de positionnement nanométrique du miroir secondaire sont constitués par au moins trois actionneurs nanométriques linéaires venant en appui sur la face arrière du miroir secondaire.

Selon une autre particularité, le système opto-mécanique selon l'invention comprend en outre :
- des dispositifs de déploiement pour le déploiement des pétales et/ou du miroir secondaire entre leur configuration repliée de stockage et leur configuration déployée de fonctionnement, et
- des dispositifs de blocage dans la configuration déployée de fonctionnement.

Un autre objet de l'invention concerne un satellite d'observation comprenant un système opto-mécanique selon l'invention.

### Brève description des dessins

L'invention, selon des exemples de réalisation, sera bien comprise et ses avantages apparaitront mieux à la lecture de la description détaillée qui suit, donnée à titre indicatif et nullement limitatif, en référence aux dessins annexés donnés à titre d'exemples dans lesquels :
[Fig. 1] la figure 1 est une vue en perspective d'un exemple de réalisation d'un système opto-mécanique selon l'invention, en configuration repliée ;
[Fig. 2] la figure 2 est une vue en perspective du système opto-mécanique de la figure 1, en configuration déployée ;
[Fig. 3] la figure 3 est une représentation schématique, vue de profil et en configuration repliée, de différents éléments d'un système opto-mécanique selon l'invention pouvant correspondre à la figure 1 ;
[Fig. 4] la figure 4 est une représentation schématique, vue de profil et en configuration déployée, du système opto-mécanique de la figure 3, un seul pétale étant représenté ;
[Fig. 5] la figure 5 est une représentation schématique, de profil, d'une partie d'un exemple de système opto-mécanique selon l'invention illustrant la cinématique de déploiement dudit système opto-mécanique pouvant correspondre à la figure 1 ;
[Fig. 6] la figure 6 représente un exemple de pétale monté sur le châssis d'un système opto-mécanique selon l'invention, vu de profil en position repliée, pouvant correspondre à la figure 1 ;
[Fig. 7] la figure 7 représente le pétale de la figure 6 en position déployée ;
[Fig. 8] la figure 8 montre un exemple de satellite d'observation selon l'invention ;
[Fig. 9] la figure 9 illustre un exemple de procédé de pilotage du système opto-mécanique selon l'invention.

### Description détaillée

Les éléments identiques ou similaires représentés sur les figures précitées sont identifiés par des références numériques identiques.

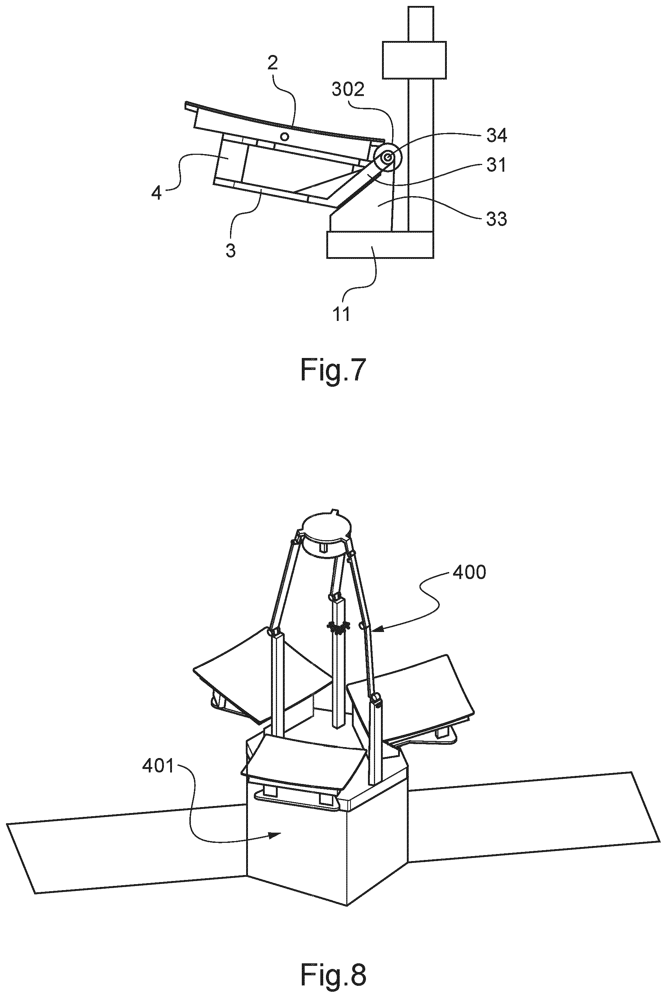

Le système opto-mécanique selon l'invention peut faire partie, de manière non limitative, d'un télescope 400 et notamment d'un satellite 401 d'observation de la terre, comme représenté en figure 8.

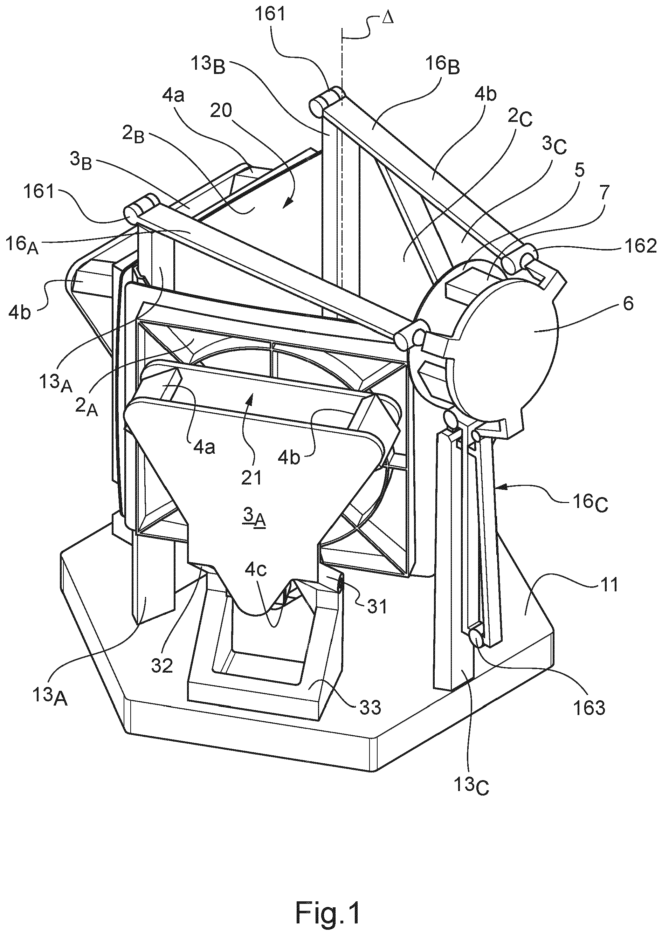

Comme représenté à la figure 1, le système opto-mécanique illustré comprend un miroir primaire, agencé autour d'un central Δ et segmenté en trois pétales 2_{A}, 2_{B}, 2c (la référence 2 désignant de façon générique l'un quelconque desdits pétales) ici en configuration repliée de stockage. Chacun des pétales est monté sur une plateforme primaire 3_{A}, 3_{B}, 3c (la référence 3 désignant de façon générique l'une quelconque des plateformes primaires), qui intègre trois actionneurs linéaires nanométriques 4a, 4b, 4c (la référence 4 désignant de façon générique l'un quelconque desdits actionneurs).

Chaque pétale comprend une face miroir primaire 20 une face arrière 21 opposée à la face miroir 20 et sur laquelle s'appuient directement ou indirectement les actionneurs linéaires nanométriques 4. Les faces arrière 21 sont disposées vers l'extérieur tandis que les faces miroir 20 sont disposées en regard d'un pilier central creux ajouré faisant partie du châssis.

En variante, chaque pétale en position repliée peut par exemple venir s'insérer totalement ou partiellement entre deux barreaux du pilier central creux ajouré présentant alors des logements à cet effet.

Comme représenté à la figure 1, le châssis comprend notamment un socle 11 solidaire d'un pilier creux ajouré comprenant trois barreaux disposés orthogonalement par rapport au socle. Le pilier creux ajouré comprend trois barreaux 13_{A}, 13_{B} et 13c parallèles à l'axe central Δ du système opto-mécanique, lesdits barreaux étant ci-après désignés de façon générique par la référence 13. Le pilier creux ajouré comprend par exemple une structure de renfort ajourée formant par exemple un treillis (non représenté) reliant chacun des deux barreaux 13 consécutifs.

Comme représenté à la figure 1, le pilier creux ajouré laisse un volume central libre, autour duquel sont répartis les barreaux 13. Chaque barreau 13 présente une base fixée sur le socle 11 et un sommet. Le pilier creux ajouré comprend trois barreaux implantés à 120° les uns des autres, les bases des barreaux correspondant aux trois sommets d'un triangle équilatéral, le volume central libre étant par conséquent de section triangulaire équilatérale et s'étendant selon la direction axiale.

En variante, le pilier creux ajouré pourrait par exemple comprendre des doubles barreaux.

En variante le pilier creux ajouré pourrait par exemple comprendre quatre barreaux implantés à 90° les uns des autres aux quatre sommets d'un carré.

Comme représenté à la figure 1, dans la configuration repliée de stockage, les pétales 2_{A}, 2_{B}, 2c du miroir primaire sont sécurisés au pilier central par des mécanismes de gerbage. Chacun des pétales 2 est par exemple maintenu en position repliée par un (ou éventuellement plusieurs) mécanisme de gerbage primaire durant les phases de lancement et de mise en orbite du satellite. Chaque pétale 2 est monté sur sa plateforme primaire 3 qui est articulée relativement au châssis autour d'un axe de rotation parallèle au plan de référence du socle, c'est-à-dire orthogonal à l'axe central Δ du système opto-mécanique. Chaque plateforme primaire 3 comprend deux bras de montage 31, 32 articulés par des liaisons pivots sur une chape 33 fixée sur le socle 11 du châssis.

Comme représenté à la figure 1, le système opto-mécanique comprend également un miroir secondaire 5 porté par une plateforme secondaire 6 qui intègre trois actionneurs linéaires nanométriques 7. Des éléments de liaison de la plateforme secondaire 6 par rapport au châssis 10 comprennent deux bras rigides 16_{A}, 16_{B} et un bras pliable 16c. Chacun des bras 16_{A}, 16_{B}, 16c (qu'il soit rigide ou pliable) comprend une première extrémité, articulée au sommet de l'un des barreaux 13_{A}, 13_{B}, 13c par une charnière inférieure 161, et une seconde extrémité articulée sur la plateforme secondaire 6 par une charnière supérieure 162. Ces liaisons peuvent également être du type rotule.

Comme représenté à la figure 1, le bras pliable 16c comporte de plus une articulation intermédiaire 163 qui divise le bras pliable en deux portions, à savoir une portion inférieure 164 et une portion supérieure 165, ce qui permet de plier ledit bras en deux. Les barreaux 13_{A}, 13_{B} sur lesquels sont articulés les bras rigides 16_{A}, 16_{B} sont par exemple plus longs que le barreau 13c sur lequel est articulé le bras pliable 16c de sorte que, lorsque le miroir secondaire 5 est en position repliée, les deux bras rigides 16_{A}, 16_{B} forment un angle inférieur ou égal à 90° avec le barreau 13_{A}, 13_{B} auquel ils sont respectivement rattachés. Ainsi le miroir secondaire 5 s'abaisse sous le sommet du pilier central. Lorsque le miroir **secondaire** 5 est en configuration repliée, le bras pliable 16c est complètement plié en deux, c'est-à-dire que ses deux portions 164, 165 sont sensiblement parallèles et plaquées l'une contre l'autre, l'articulation intermédiaire 163 formant un angle proche de 0°. Par ailleurs, toujours en configuration repliée, la portion inférieure du bras pliable forme un angle proche de 0° avec le barreau 13c auquel le bras pliable 16c est rattaché. Ainsi, le système opto-mécanique est particulièrement compact lorsque le miroir secondaire 5 est en configuration repliée.

En variante, le barreau 13c peut également par exemple comprendre des extensions, qui forment un logement de réception et un support pour la plateforme secondaire 6 et le miroir secondaire 5 en configuration repliée.

En configuration repliée, la plateforme secondaire 6 ou les bras 16 sont par exemple maintenus par des mécanismes de gerbage durant les phases de lancement et de mise en orbite du satellite.

Les mécanismes de gerbage pour le miroir secondaire, de même que les mécanismes de gerbage pour le miroir primaire, sont par exemple configurés pour s'ouvrir sur commande aux fins de déploiement du système opto-mécanique.

Les mécanismes de gerbage des pétales sont par exemple rattachés aux pétales ou aux plateformes primaires. Une fixation, par le mécanisme de gerbage, du pétale directement au châssis, permettra de ne pas exercer les efforts générés durant le lancement, sur les actionneurs.

Le ou les mécanismes de gerbage du miroir secondaire sont par exemple rattachés au miroir secondaire ou à la plateforme secondaire. Une fixation, par le mécanisme de gerbage, du miroir secondaire directement au châssis, permettra de ne pas exercer les efforts générés durant le lancement, sur les actionneurs.

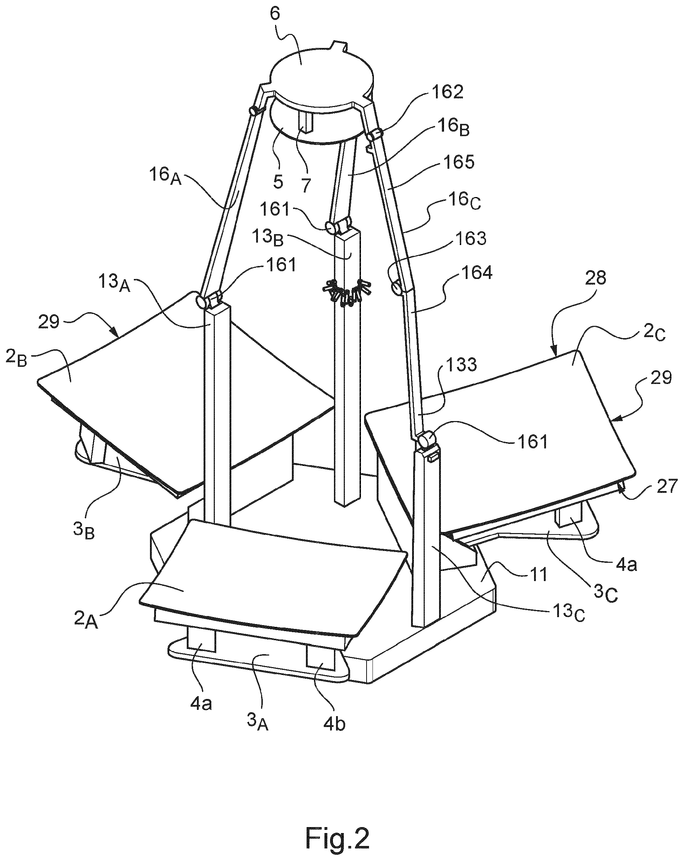

Comme représenté à la figure 2, le miroir secondaire 5 peut par exemple être déplacé de sa position repliée vers une position déployée dans laquelle le miroir secondaire 5 est centré sur l'axe central du système opto-mécanique et dans laquelle sa face miroir est orientée vers le socle 11 du châssis. Le miroir secondaire 5 est situé sur l'axe central Δ du système opto-mécanique, dans le prolongement axial du volume central libre délimité par le pilier central, à distance au-delà des sommets des barreaux 13. Le miroir secondaire 5 est ainsi positionné au-delà des sommets des barreaux dans un volume délimité par des droites venant dans le prolongement des barreaux 13, dans la configuration déployée de fonctionnement. Sa face miroir est orientée vers le miroir primaire.

Pour plus de précision et de stabilité, chacune des liaisons pivots passives, à savoir les charnières inférieures 161 et les charnières supérieures 162 des trois bras 16_{A}, 16_{B}, 16c, sont par exemple pourvues de butées et de verrous de fin de course (non représentés) qui permettent avantageusement de bloquer les éléments de liaison en position déployée. Le système opto-mécanique gagne ainsi en fiabilité. La hauteur du miroir secondaire 5 en position déployée par rapport au socle 11 du châssis (laquelle hauteur correspond approximativement à la longueur cumulée d'un barreau 13 et du bras 16 qui prolonge ledit barreau) peut par exemple être telle que la zone de focalisation du miroir secondaire, vers laquelle les rayons réfléchis par le miroir secondaire convergent, soit située sensiblement au niveau du socle 11 (c'est-à-dire entre les bases des barreaux) ou à proximité, d'un côté ou de l'autre du socle.

En variante, on pourrait prévoir un miroir secondaire fixe par rapport au châssis et positionné sur sa plateforme secondaire dans la position correspondant à la figure 2.

Comme représenté à la figure 2, les trois pétales 2_{A}, 2_{B}, 2c du miroir primaire, peuvent être mus de leur position repliée vers une position déployée dans laquelle ils forment le miroir primaire segmenté renvoyant les rayons lumineux reçus vers le miroir secondaire 5. L'axe de rotation du pétale peut être par exemple situé dans le plan défini par les deux barreaux ou un plan parallèle et à l'extérieur du pilier. Chacun des pétales 2 présente par exemple :
- un bord interne qui s'étend parallèlement et à proximité immédiate de l'axe de rotation du pétale défini par les liaisons pivots 34, 35, de sa plateforme primaire,
- deux bords latéraux 27, 28 qui partent des extrémités du bord interne vers l'extérieur du système opto-mécanique,
- et un bord externe 29, opposé au bord interne.

En figure 2, les pétales illustrés ont une forme (on parle ici de leur projection dans un plan orthogonal à leur axe focal primaire FP) carrée ou rectangulaire.

En variante, les pétales pourraient par exemple avoir une forme trapézoïdale avec un bord externe plus long que le bord interne, ou encore une forme circulaire, une forme hexagonale ou une forme non polynomiale. La forme des pétales peut en effet être adaptée aux besoins de la mission.

En variante, les pétales pourraient eux-mêmes être segmentés et déployables en plusieurs parties, chacun de ces pétales en plusieurs parties faisant par exemple face à un jour entre deux barreaux 13 consécutifs.

Comme représenté à la figure 2, chaque pétale 2 et sa plateforme primaire 3 sont par exemple agencés face à un intervalle libre entre deux barreaux consécutifs (le pétale 2_{A} est ainsi situé entre les barreaux 13_{A} et 13_{B}), lesdits barreaux consécutifs étant agencés de part et d'autre des droites qui sont tangentes aux bords latéraux 27, 28 du pétale. Ainsi, les rayons lumineux réfléchis par le pétale 2 en direction du miroir secondaire 5 ne rencontrent pas les barreaux 13, ni les bras 16 qui portent la plateforme secondaire.

Le positionnement des pétales et du miroir secondaire, par commande d'au moins trois actionneurs de positionnement nanométrique, peut être piloté de façon connue par un procédé de récupération de phase qui permet de régler les positions des miroirs en fonction des images reçues par le capteur photosensible. Un module de télécommunication est prévu pour la mise en œuvre du procédé de récupération de phase. De façon classique, cette opération est effectuée en collaboration avec le segment sol, par récupération de phase, sur la base d'analyses d'images captées par le capteur photosensible 19 alors que le système opto-mécanique est pointé vers une étoile donnée. Les actionneurs 7 de positionnement nanométrique du miroir secondaire et les actionneurs 4 de positionnement nanométrique des pétales sont alors pilotés pour placer les miroirs primaire et secondaire dans une configuration de réglage initial, qui confère au système opto-mécanique les performances souhaitées notamment en termes de netteté, résolution, précision.

En variante, on peut prévoir un procédé comprenant une étape Etp001 de calibration des miroirs consistant en un procédé de récupération de phase, suivi d'une ou plusieurs étapes Etp002 de surveillance et de repositionnement.

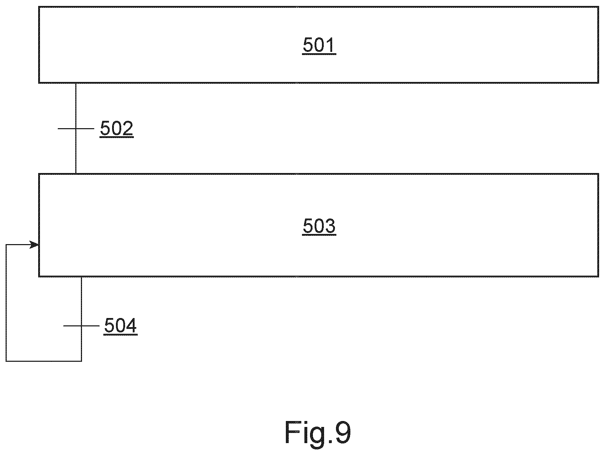

De préférence, après l'étape de calibration, on exécute par exemple à intervalles de temps réguliers, plusieurs étapes de surveillance et de repositionnement, comme représenté à la figure 9. Les variations thermoélastiques sont par exemple corrigées par une surveillance et un repositionnement toutes les 10 secondes. Pour la mesure en elle-même, un instrument laser peut par exemple fonctionner à quelques kHz. Il est par exemple possible de moyenner plusieurs mesures.

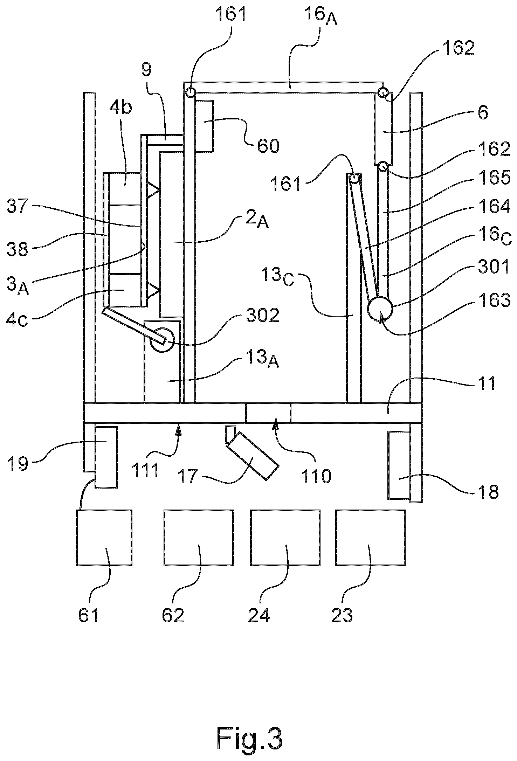

Comme représenté à la figure 3, un module de surveillance et de repositionnement 62 surveille et pilote le positionnement des miroirs primaire et secondaire, en fonction de données de distances mesurées à bord générées à partir des capteurs de mesures de distance placés sur chacun des pétales (2, 2_{A}, 2_{B}, 2c) et sur le miroir secondaire 5. Avantageusement ces opérations de surveillance et de repositionnement permettent de garantir, sur la durée, un positionnement nanométrique des pétales et du miroir secondaire par rapport au châssis. Avantageusement cette routine peut être exécutée à bord et les performances sont garanties durant toute la mission malgré les perturbations thermoélastiques subies par le système opto-mécanique dans l'environnement spatial.

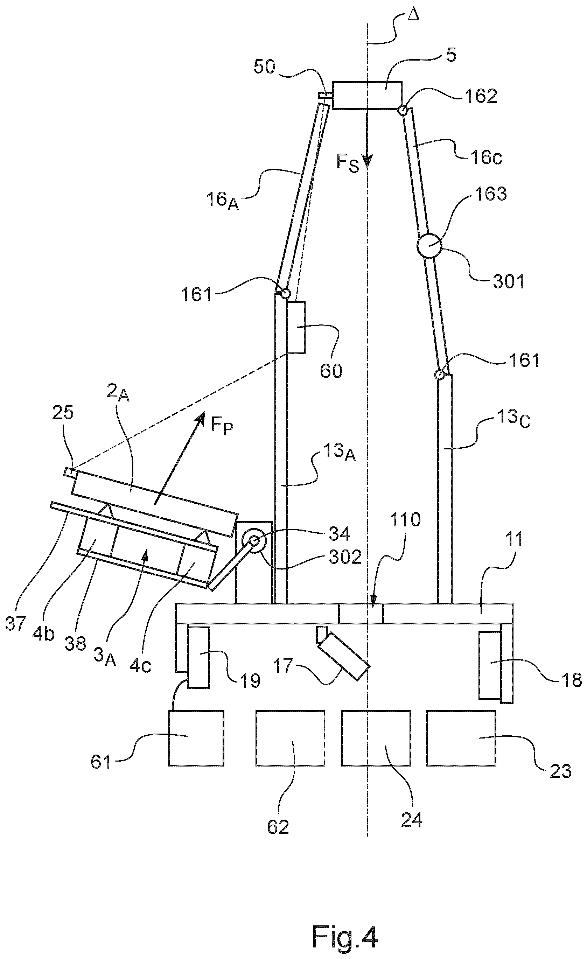

Comme représenté à la figure 4, les opérations de repositionnement utilisent des mesures de distances fournies par un émetteur-récepteur LASER 60, en coopération avec des cibles 25 et 50 fixées aux miroirs.

On utilise avantageusement le réglage initial par récupération de phase pour établir des mesures de distances dans une configuration initiale. Ces mesures de distances servent ainsi de référence pour ajuster les positions des miroirs.

A cet effet, on utilise par exemple trois cibles pour chaque pétale 2 et trois cibles pour le miroir secondaire 5, cibles dont les positions sont mesurées par rapport à un émetteur récepteur LASER placé sur un des barreaux du pilier creux ajouré.

Avantageusement ces opérations, nécessitant peu de ressources de calcul et d'énergie, sont par exemple effectuées de façon autonome par le système opto-mécanique, sans intervention du segment sol, ne nécessitant ni télécommunication avec le sol, ni analyse d'images.

Avantageusement encore, un tel repositionnement à l'aide du module de surveillance et de repositionnement 62 et des capteurs de distances, prend très peu de temps, comparé à une opération de récupération de phase (également désignée par *« phase retrieval »* en anglais), telle l'opération initiale de calibrage, qui nécessite de modifier spécifiquement l'orientation du système opto-mécanique vers une étoile déterminée, d'échanger avec le sol et d'effectuer des analyses d'images.

Avantageusement un tel repositionnement, à l'aide du module de surveillance et de repositionnement et des capteurs de distances, permet aussi un gain de temps opérationnel ainsi qu'un gain en termes d'énergie et de ressources matérielles nécessaires au calcul.

Avantageusement encore un tel repositionnement, à l'aide du module de surveillance et de repositionnement et des capteurs de distances ne nécessite pas une interruption de la mission, mais s'effectue par exemple quelle que soit la direction pointée par le système opto-mécanique, en temps masqué, voire même lorsque le système opto-mécanique est en train de capturer des images pour la mission. Il peut toutefois être préférable d'interrompre les mesures au moment des captations d'images si la longueur d'onde du télémètre LASER 60 est de nature à perturber le capteur photosensible 19.

Comme représenté à la figure 4, le système opto-mécanique comprend par exemple des capteurs de mesure de distances utilisés pour la détection des position et orientation du miroir secondaire 5 et de chacun des pétales 2 relativement au châssis. Les capteurs de mesure de distances comprennent par exemple :
- pour chacun des pétales 2, trois cibles 25 du type coin de cube, non alignées, fixées à la périphérie dudit pétale du côté de sa face miroir primaire (une seule cible 25 est représentée à la figure 4),
- pour le miroir secondaire 5, trois cibles 50 du type coin de cube, non alignées, fixées à la périphérie dudit miroir secondaire 5 du côté de sa face miroir secondaire (une seule cible 50 est représentée à la figure 4).

Comme représenté à la figure 4, l'émetteur-récepteur LASER émet un rayonnement de mesure en direction des cibles et est apte à détecter un rayonnement lui parvenant dans la même direction que le rayonnement de mesure, l'émetteur-récepteur LASER 60 étant monté fixe sur le châssis en un endroit visible par toutes les cibles 25 des trois pétales et par toutes les cibles 50 du miroir secondaire. Avantageusement, pour les tests au sol, il est possible d'utiliser un module de métrologie à LASER disponible dans le commerce, un tel module étant par la suite spatialisé pour l'intégration dans un engin spatial.

De préférence, l'endroit choisi pour positionner l'émetteur récepteur LASER permet des mesures à moins de 45°, c'est-à-dire que l'émetteur récepteur LASER 60 orienté parallèlement à l'axe central peut voir l'ensemble des cibles dans deux cônes supérieurs et inférieurs présentant un angle solide de 45°. Par exemple, on prévoit d'installer l'émetteur récepteur LASER suffisamment éloigné d'un plan de référence du miroir primaire et d'un plan de référence du miroir secondaire selon la direction axiale pour que, quelle que soit la cible 25 ou 50 considérée, l'angle entre l'axe central Δ et la direction de mesure, qui relie la cible 25 considérée et l'émetteur-récepteur LASER, soit inférieur ou égal à 45°. Le plan de référence du miroir primaire passe par le centre virtuel du miroir primaire et est orthogonal à l'axe central. Le plan de référence du miroir secondaire passe par le centre du miroir secondaire et est orthogonal à l'axe central.

Ainsi, plus le diamètre du miroir primaire est grand, plus la hauteur à laquelle le télémètre LASER 60 est positionnée, est par exemple élevée, ce qui peut nécessiter d'éloigner également le miroir secondaire en position déployée et de dimensionner en conséquence les barreaux 13 et/ou les bras 16.

Comme représenté à la figure 4, l'émetteur-récepteur LASER 60 est par exemple fixé à proximité du sommet du barreau 13_{A}.

Avantageusement, le caractère ajouré du pilier central creux, permet aisément de trouver un emplacement sur le châssis pour recevoir l'émetteur-récepteur LASER et trois emplacements sur chaque pétale ainsi que trois emplacements sur le miroir secondaire où installer respectivement les cibles 25 et 50 et de façon à ce que toutes les cibles 25, 50 soient visibles par l'émetteur-récepteur LASER 60.

Comme représenté à la figure 4, le socle 11 du châssis présente une ouverture 110 centrée sur l'axe central Δ du système opto-mécanique, en regard du volume central vide délimité par le pilier creux ajouré et en regard du miroir secondaire 5 en configuration déployée. Les rayons reçus et réfléchis par le miroir secondaire 5 en position déployée traversent par exemple le volume central vide puis l'ouverture 110 puis sont déviés par un miroir de déviation 17, fixé sous une face inférieure 111 du socle en regard axialement de l'ouverture 110, en direction d'un miroir tertiaire 18, fixé sous la face inférieure 111 du socle. Le miroir tertiaire 18 renvoie et concentre les rayons reçus en direction d'un capteur photosensible 19 également fixé sous la face inférieure 111 du socle.

En variante, l'ouverture pourrait être supprimée pour disposer un capteur photosensible dans la zone de concentration des rayons lumineux.

Une unité de commande à microprocesseurs 23 permet par exemple d'opérer le système opto-mécanique via des bus de données, d'adressage et de contrôle.

On prévoit par exemple au moins un élément radiant 25 pour le refroidissement des divers constituants du système opto-mécanique susceptibles de chauffer.

Le système opto-mécanique comprend par exemple aussi :
- un module télécommunication pour la calibration 61 et
- un module de surveillance et de repositionnement 62 comprenant une boucle de contrôle.

Le module de télécommunication, comme le module de surveillance et de repositionnement, se présentent par exemple sous la forme de module électronique hardware et software.

La figure 3 montre le système opto-mécanique de la figure 4, en configuration repliée de stockage. Le déploiement est par exemple obtenu par un unique actionneur en rotation 301 qui agit sur l'articulation intermédiaire 163 du bras pliable 16c ; les autres liaisons pivots des bras 16 étant par exemple passives.

En variante, pour des raisons de redondance, un actionneur en rotation additionnel peut toutefois être prévu au même endroit.

L'utilisation d'un seul actionneur 301, éventuellement redondé, pour l'ensemble de la structure de déploiement permet notamment un gain de masse significatif.

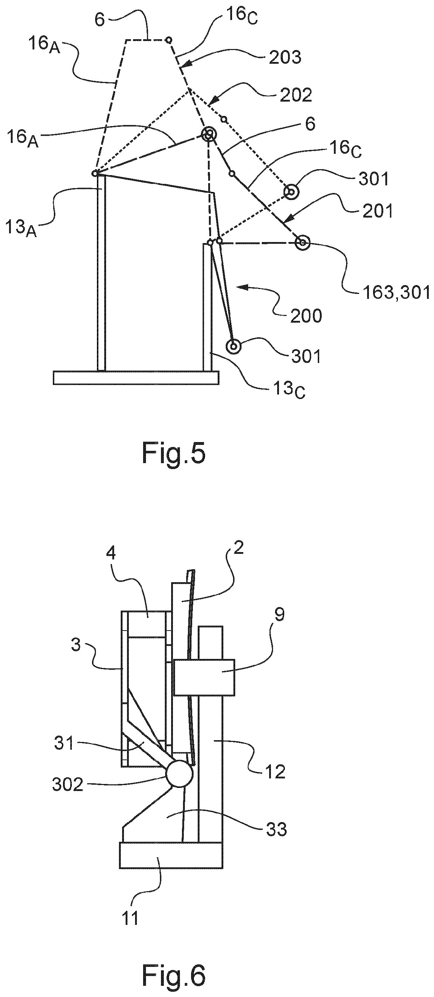

Comme représenté à la figure 3 ou 6, on peut par exemple prévoir, pour chaque pétale, un mécanisme de gerbage 9 agencé à un angle externe dudit pétale ou de sa plateforme primaire ou au niveau d'un bord latéral du pétale ou de sa plateforme primaire, le mécanisme de gerbage étant configuré pour maintenir le pétale 2 ou sa plateforme primaire 3 attaché à l'un des deux barreaux 13 du châssis en position repliée.

Comme représenté aux figures 6 et 7, à chaque plateforme primaire 3 est par exemple associé un unique actionneur rotatif 302 (avec, éventuellement, un actionneur redondant de secours) agissant sur la liaison pivot 34 pour le déploiement du pétale depuis la position repliée (figure 6) jusqu'à la position déployée (figure 7), la liaison pivot 35 étant passive.

En position déployée, chaque plateforme primaire 3 peut par exemple venir en appui sur la chape 33. Des butées de fin de course (non représentées), contre lesquelles une face arrière de la plateforme primaire 3 vient en appui, peuvent être prévues sur chaque chape 33. Ces butées définissent par exemple une position de référence pour la position déployée du pétale. La simplicité de la cinématique de déploiement du miroir primaire permet par exemple d'utiliser un unique actionneur rotatif par pétale, ce qui induit un gain de masse.

La position juste après déploiement présente par exemple une précision micrométrique.

La figure 5 montre un exemple de cinématique de déploiement des éléments de liaison permettant le passage de la position repliée à la position déployée du miroir secondaire 5. La ligne en trait plein 200 représente le bras pliable 16c, la plateforme secondaire 6 et le premier bras rigide 16_{A} (le second bras rigide 16_{B} étant parallèle au premier et masqué par celui-ci en vue de profil) en position repliée. La ligne en pointillés 201 (premier type de pointillés) représente le bras pliable 16c, la plateforme secondaire 6 et le premier bras rigide 16_{A} dans une première position intermédiaire. La ligne en pointillés 202 (deuxième type de pointillés) représente le bras pliable 16c, la plateforme secondaire 6 et le premier bras rigide 16_{A} dans une seconde position intermédiaire. La ligne en pointillés 203 (troisième type de pointillés) représente le bras pliable 16c, la plateforme secondaire 6 et le premier bras rigide 16_{A} dans la position déployée.

Pour chaque pétale 2, trois actionneurs linéaires nanométriques 4a, 4b, 4c sont par exemple prévus. Ces actionneurs sont par exemple intégrés dans la plateforme primaire 3 du pétale.

Le miroir est par exemple supporté par des bipodes reliés par ailleurs à une interface arrière, les actionneurs nanométriques agissant sur cette interface.

En variante le miroir peut être réalisé d'une seule pièce avec l'interface sur laquelle agissent les actionneurs nanométriques.

En configuration déployée, les plateformes primaires 3 des pétales et la plateforme secondaire 6 du miroir secondaire sont rendues solidaires du châssis (c'est-à-dire fixes par rapport à celui-ci), par exemple par des mécanismes de blocage. Ainsi dans la configuration déployée, les actionneurs nanométriques exercent leur action sur un pétale ou sur le miroir secondaire, en étant par ailleurs en appui sur le châssis.

Les actionneurs sont par exemple fixés au panneau d'une plateforme et agissent par déplacement d'une surface d'appui sur le miroir. Les actionneurs sont par exemple agencés dans la plateforme 3 de façon à ce que leur axe de travail soit parallèle à l'axe focal primaire F_{P} du pétale.

Les miroirs sont par exemple réglables en rotations et en translation en commandant les actionneurs nanométriques.

Ainsi les trois actionneurs linéaires nanométriques permettent par exemple de régler de façon très précise la position du pétale selon l'axe focal primaire du pétale (ou plus généralement selon la direction de travail des actionneurs) et l'orientation du pétale autour de trois axes orthogonaux audit axe focal.

De façon analogue aux pétales, la plateforme secondaire 6 intègre par exemple trois actionneurs linéaires nanométriques 7 qui permettent de régler avec une précision nanométrique l'orientation du miroir secondaire, ainsi que sa position selon l'axe focal secondaire FS qui correspond à l'axe central Δ du système opto-mécanique dans la configuration déployée.

Le système opto-mécanique vise à capter les rayons lumineux qui lui parviennent dans la direction de son axe central Δ. Le chemin parcouru par les rayons réfléchis par les pétales du miroir primaire en direction du miroir secondaire 5 est spécifique à l'invention grâce aux barreaux 13 du pilier creux ajouré et aux bras 16 reliés aux sommets de ces barreaux. Les rayons lumineux ne sont ainsi pas perturbés par les barreaux ou les bras qui ne les rencontrent pas.

Trois flux lumineux sont par exemple captés par les pétales et entièrement réfléchis vers le miroir secondaire, avant d'être entièrement concentrés vers une zone située entre les bases des barreaux.

L'architecture proposée selon l'invention permet en outre d'obtenir un système opto-mécanique léger et compact pour être embarqué dans des satellites également de plus petite taille. Le coût du lancement est ainsi avantageusement réduit.

## Revendications

1. Système opto-mécanique pour un engin spatial, comprenant un châssis, un miroir primaire comportant une pluralité de pétales (2, 2_{A}, 2_{B}, 2c), un miroir secondaire et un capteur photosensible (19) configuré pour recueillir les rayons réfléchis par les miroirs primaire et secondaire, chacun des pétales ayant une face miroir (20) et une face arrière (21), le miroir secondaire (5) ayant une face miroir et une face arrière, le miroir secondaire étant monté sur une plateforme secondaire (6), chacun des pétales étant monté sur une plateforme primaire (3, 3_{A}, 3_{B}, 3c) individuelle déployable par rapport au châssis entre une configuration repliée de stockage et une configuration déployée de fonctionnement, les faces miroir des pétales étant configurées pour concentrer les rayons réfléchis vers le miroir secondaire dans la configuration déployée de fonctionnement,
**caractérisé en ce que** :
- le châssis comprend un pilier creux ajouré délimitant un volume central libre,
- chaque plateforme primaire ou chaque miroir primaire (3), en configuration repliée de stockage, est solidarisé audit pilier creux ajouré par au moins un premier mécanisme de gerbage (9),
- le pilier creux ajouré comprend au moins trois barreaux (13, 13_{A}, 13_{B}, 13c) longitudinaux répartis autour du volume central libre, chacun desdits barreaux présentant une base et un sommet,
- les sommets des barreaux portent des éléments (16_{A}, 16_{B}, 16c) de liaison avec la plateforme secondaire (6),
- le miroir secondaire (5) est positionné au-delà des sommets des barreaux dans un volume délimité par des droites venant dans le prolongement des barreaux (13), au moins dans la configuration déployée de fonctionnement,
- la plateforme secondaire est déployable par rapport au châssis entre sa configuration repliée de stockage et sa configuration déployée de fonctionnement, et les éléments de liaison entre le châssis et la plateforme secondaire (6) comprennent trois bras (16), dont deux bras rigides (16_{A}, 16_{B}) et un bras pliable (16c), qui forment, en position déployée, un trépied supportant la plateforme secondaire (6), chacun des trois bras ayant une extrémité inférieure reliée au châssis par une charnière inférieure (161) définissant une liaison pivot inférieure et une extrémité supérieure reliée à la plateforme secondaire (6) par une charnière supérieure (162) définissant une liaison pivot supérieure, le bras pliable ayant de plus une articulation intermédiaire (163) entre ses extrémités inférieure et supérieure définissant une liaison pivot intermédiaire, le miroir secondaire (5) ou sa plateforme secondaire (6), dans la configuration repliée de stockage, étant rabattu face au pilier creux ajouré et solidarisé au pilier creux ajouré par au moins un second mécanisme de gerbage,
- le châssis comprend un socle (11) sur lequel le pilier creux ajouré est fixé, lequel socle présente une ouverture (110) à l'endroit de ladite zone de concentration des rayons lumineux, le système opto-mécanique comprenant, sur ledit socle à l'opposé du miroir secondaire (5), un miroir tertiaire (18) ayant un axe focal tertiaire et un miroir de déviation (17) configuré pour recevoir les rayons partant du miroir secondaire et pour dévier ces rayons vers le miroir tertiaire, le capteur photosensible (19) étant agencé sur l'axe focal tertiaire pour capter les rayons renvoyés par le miroir tertiaire.

2. Système opto-mécanique selon la revendication 1, dans lequel les pétales, dans la configuration déployée de fonctionnement, sont disposés chacun en face d'un jour entre deux barreaux (13) consécutifs du pilier creux ajouré qui est configuré pour que les rayons réfléchis par chacun des pétales vers le miroir secondaire ne rencontrent pas le pilier creux ajouré, les rayons lumineux réfléchis par le miroir secondaire étant dirigés vers une zone de concentration des rayons lumineux disposée entre les bases des barreaux.

3. Système opto-mécanique selon l'une des revendications 1 à 2, dans lequel les pétales sont au moins au nombre de trois (2_{A}, 2_{B}, 2c), trois axes de pivotement desdits pétales étant disposés selon un triangle équilatéral, de sorte que lesdits trois pétales sont agencés autour d'un axe central (Δ) du système opto-mécanique à 120°C les uns des autres.

4. Système opto-mécanique selon l'une des revendications 1 à 3, dans lequel chacun des pétales (2) présente une projection rectangulaire ou carrée dans un plan orthogonal à son axe focal primaire (FP), les bases des barreaux étant disposées de sorte que des droites tangentes aux bords latéraux (27, 28) des pétales, dans la configuration déployée, passent entre les barreaux.

5. Système opto-mécanique selon l'une des revendications 1 à 4, comprenant en outre des actionneurs de positionnement nanométrique (4, 7) disposés dans les plateformes primaires et dans la plateforme secondaire pour le réglage de l'orientation et de la position de chacun des pétales (2) et du miroir secondaire (5).

6. Système opto-mécanique selon la revendication 5, dans lequel les actionneurs de positionnement nanométrique de chacun des pétales (2) sont constitués par au moins trois actionneurs nanométriques linéaires (4a, 4b, 4c) venant en appui sur la face arrière (21) dudit pétale et les actionneurs de positionnement nanométrique du miroir secondaire sont constitués par au moins trois actionneurs nanométriques linéaires (7) venant en appui sur la face arrière du miroir secondaire.

7. Système opto-mécanique selon l'une des revendications 1 à 6, **caractérisé en ce qu'**il comprend :
- des dispositifs de déploiement (301, 302) pour le déploiement des pétales (2) et/ou du miroir secondaire (5) entre leur configuration repliée de stockage et leur configuration déployée de fonctionnement, et
- des dispositifs de blocage dans la configuration déployée de fonctionnement.

8. Satellite d'observation comprenant un système opto-mécanique selon l'une des revendications 1 à 7.

## Patentansprüche

1. Optomechanisches System für ein Raumfahrzeug, umfassend ein Gestell, einen Primärspiegel, der eine Vielzahl von Blütenblättern (2, 2_{A}, 2_{B}, 2_{C}) aufweist, einen Sekundärspiegel und einen lichtempfindlichen Sensor (19), der so eingerichtet ist, dass er die von den Primär- und Sekundärspiegeln reflektierten Strahlen erfasst, wobei jedes der Blütenblätter eine Spiegelseite (20) und eine Rückseite (21) hat, wobei der Sekundärspiegel (5) eine Spiegelseite und eine Rückseite hat, wobei der Sekundärspiegel auf einer Sekundärplattform (6) montiert ist, wobei jedes der Blütenblätter auf einer einzelnen Primärplattform (3, 3_{A}, 3_{B}, 3_{C}) montiert ist, die gegenüber dem Gestell zwischen einer zusammengeklappten Lagerkonfiguration und einer ausgeklappten Betriebskonfiguration ausgeklappt werden kann, wobei die Spiegelflächen der Blütenblätter so eingerichtet sind, dass sie die reflektierten Strahlen in Richtung des Sekundärspiegels in der ausgeklappten Betriebskonfiguration konzentrieren,
**dadurch gekennzeichnet, dass**:
- das Gestell einen hohlen Lochpfosten umfasst, der ein freies zentrales Volumen begrenzt,
- jede Primärplattform oder jeder Primärspiegel (3), in zusammengeklappter Lagerkonfiguration, durch mindestens einen ersten Stapelmechanismus (9) mit diesem hohlen Lochpfosten verbunden ist,
- der hohle Lochpfosten mindestens drei Längssprossen (13, 13_{A}, 13_{B}, 13_{C}) umfasst, die um das freie zentrale Volumen verteilt sind, wobei jede der Sprossen eine Basis und eine Spitze besitzt,
- die Spitzen der Sprossen Elemente (16_{A}, 16_{B}, 16_{C}) zum Verbinden mit der Sekundärplattform (6) tragen,
- der Sekundärspiegel (5) mindestens in der ausgeklappten Betriebskonfiguration über die Spitzen der Sprossen hinaus in einem Volumen positioniert ist, das durch Geraden begrenzt ist, die in die Verlängerung der Sprossen (13) kommen,
- die Sekundärplattform gegenüber dem Gestell zwischen ihrer zusammengeklappten Lagerkonfiguration und ihrer ausgeklappten Betriebskonfiguration ausgeklappt werden kann, und die Verbindungselemente zwischen dem Gestell und der Sekundärplattform (6) drei Arme (16) umfassen, darunter zwei starre Arme (16_{A}, 16_{B}) und einen klappbaren Arm (16_{C}), die in ausgeklappter Position ein Stativ bilden, das die Sekundärplattform (6) trägt, wobei jeder der drei Arme ein unteres Ende, das mit dem Gestell durch ein unteres Scharnier (161) verbunden ist, das eine untere Drehverbindung definiert, und ein oberes Ende hat, das mit der Sekundärplattform (6) durch ein oberes Scharnier (162) verbunden ist, das eine obere Drehverbindung definiert, wobei der klappbare Arm ferner ein Zwischengelenk (163) zwischen seinem unteren und seinem oberen Ende hat, das eine Zwischendrehverbindung definiert, wobei der Sekundärspiegel (5) oder seine Sekundärplattform (6), in der zusammengeklappten Lagerkonfiguration, gegenüber dem hohlen Lochpfosten zusammengeklappt ist und durch mindestens einen zweiten Stapelmechanismus mit dem hohlen Lochpfosten verbunden ist,
- das Gestell einen Sockel (11) umfasst, an dem der hohle Lochpfosten befestigt ist, wobei der Sockel eine Öffnung (110) an der Stelle der Konzentrationszone der Lichtstrahlen besitzt, wobei das optomechanische System auf dem gegenüber dem Sekundärspiegel (5) liegenden Sockel einen Tertiärspiegel (18) mit einer tertiären Brennachse und einen Umlenkspiegel (17) umfasst, der so eingerichtet ist, dass er die von dem Sekundärspiegel ausgehenden Strahlen empfängt und diese Strahlen zu dem Tertiärspiegel umleitet, wobei der lichtempfindliche Sensor (19) auf der tertiären Brennachse angeordnet ist, um die von dem tertiären Spiegel zurückgegebenen Strahlen aufzunehmen.

2. Optomechanisches System nach Anspruch 1, wobei die Blütenblätter in der ausgeklappten Betriebskonfiguration jeweils gegenüber einem Zwischenraum zwischen zwei aufeinanderfolgenden Sprossen (13) des hohlen Lochpfostens angeordnet sind, der so eingerichtet ist, dass die von jedem der Blütenblätter zu dem Sekundärspiegel reflektierten Strahlen nicht auf den hohlen Lochpfosten treffen, wobei die von dem Sekundärspiegel reflektierten Lichtstrahlen auf eine zwischen den Sprossenböden angeordnete Konzentrationszone der Lichtstrahlen gerichtet sind.

3. Optomechanisches System nach einem der Ansprüche 1 bis 2, wobei die Blütenblätter mindestens drei (2_{A}, 2_{B}, 2_{C} ) sind, wobei drei Schwenkachsen der Blütenblätter in einem gleichseitigen Dreieck angeordnet sind, so dass die drei Blütenblätter um eine Mittelachse (Δ) des optomechanischen Systems bei 120°C zueinander angeordnet sind.

4. Optomechanisches System nach einem der Ansprüche 1 bis 3, wobei jedes der Blütenblätter (2) eine rechteckige oder quadratische Projektion in einer Ebene orthogonal zu seiner Primärbrennachse (FP) besitzt, wobei die Böden der Sprossen so angeordnet sind, dass Geraden tangential zu den seitlichen Rändern (27, 28) der Blütenblätter in der ausgeklappten Konfiguration zwischen den Sprossen verlaufen.

5. Optomechanisches System nach einem der Ansprüche 1 bis 4, ferner umfassend in der Primärplattform und in der Sekundärplattform angeordnete nanometrische Positionierungsaktuatoren (4, 7) zum Einstellen der Ausrichtung und der Position jedes der Blütenblätter (2) und des Sekundärspiegels (5).

6. Optomechanisches System nach Anspruch 5, wobei die nanometrischen Positionierungsaktuatoren jedes der Blütenblätter (2) aus mindestens drei linearen nanometrischen Aktuatoren (4a, 4b, 4c) bestehen, die an der Rückseite (21) des Blütenblatts anliegen, und die nanometrischen Positionierungsaktuatoren des Sekundärspiegels aus mindestens drei linearen nanometrischen Aktuatoren (7) bestehen, die an der Rückseite des Sekundärspiegels anliegen.

7. Optomechanisches System nach einem der Ansprüche 1 bis 6, **dadurch gekennzeichnet, dass** es Folgendes umfasst:
- Ausklappvorrichtungen (301, 302) zum Ausklappen der Blütenblätter (2) und/oder des Sekundärspiegels (5) zwischen ihrer zusammengeklappten Lagerkonfiguration und ihrer ausgeklappten Betriebskonfiguration, und
- Sperrvorrichtungen in der ausgeklappten Betriebskonfiguration.

8. Beobachtungssatellit, der ein optomechanisches System nach einem der Ansprüche 1 bis 7 umfasst.

## Claims

1. Opto-mechanical system for a spacecraft, including a chassis, a primary mirror comprising a plurality of petals (2, 2_{A}, 2_{B}, 2_{c}), a secondary mirror and a photosensitive sensor (19) configured to collect the rays reflected by the primary and secondary mirrors, each of the petals having a mirror face (20) and a rear face (21), the secondary mirror (5) having a mirror face and a rear face, the secondary mirror being mounted on a secondary platform (6), each of the petals being mounted on an individual primary platform (3, 3_{A}, 3_{B}, 3_{c}) deployable in relation to the chassis between a folded storage configuration and a deployed operating configuration, the mirror faces of the petals being configured to concentrate the rays reflected toward the secondary mirror in the deployed operating configuration,
**characterized in that**
- the chassis includes an openwork hollow pillar delimiting a free central volume,
- each primary platform or each primary mirror (3), in the folded storage configuration, is secured to said openwork hollow pillar by at least one first stacking mechanism (9),
- the openwork hollow pillar includes at least three longitudinal bars (13, 13_{A}, 13_{B}, 13_{c}) distributed around the free central volume, each of said bars having a base and a top,
- the tops of the bars bear elements (16_{A}, 16_{B}, 16_{c}) connecting with the secondary platform (6),
- the secondary mirror (5) is positioned beyond the tops of the bars in a volume delimited by straight lines extending the bars (13), at least in the deployed operating configuration,
- the secondary platform is deployable in relation to the chassis between the folded storage configuration thereof and the deployed operating configuration thereof, and the connecting elements between the chassis and the secondary platform (6) include three arms (16), of which two rigid arms (16_{A}, 16_{B}) and a folding arm (16_{c}), which, in the deployed position, form a tripod supporting the secondary platform (6), each of the three arms having a lower end connected to the chassis by a lower hinge (161) defining a lower pivot link and an upper end connected to the secondary platform (6) by an upper hinge (162) defining an upper pivot link, the folding arm further having an intermediate joint (163) between the lower and upper ends thereof defining an intermediate pivot link, the secondary mirror (5) or the secondary platform (6) thereof, in the folded storage configuration, being folded facing the openwork hollow pillar and secured to the openwork hollow pillar by at least one second stacking mechanism,
- the chassis includes a base (11) whereon the openwork hollow pillar is attached, which base has an opening (110) at the location of said light ray concentration zone, the opto-mechanical system including, on said base opposite the secondary mirror (5), a tertiary mirror (18) having a tertiary focal axis and a deflection mirror (17) configured to receive the rays from the secondary mirror and to deflect these rays toward the tertiary mirror, the photosensitive sensor (19) being arranged on the tertiary focal axis to capture the rays returned by the tertiary mirror.

2. Opto-mechanical system according to claim 1, wherein the petals, in the deployed operating configuration, are each disposed facing a gap between two consecutive bars (13) of the openwork hollow pillar that is configured so that the rays reflected by each of the petals to the secondary mirror do not meet the openwork hollow pillar, the light rays reflected by the secondary mirror being directed to a concentration zone of the light rays disposed between the bases of the bars.

3. Opto-mechanical system according to one of claims 1 to 2, wherein the petals are at least three (2_{A}, 2_{B}, 2_{c}), three pivot axes of said petals being disposed according to an equilateral triangle, so that said three petals are arranged around a central axis (Δ) of the opto-mechanical system at 120°C from one another.

4. Opto-mechanical system according to one of claims 1 to 3, wherein each of the petals (2) has a rectangular or square projection in a plane orthogonal to the primary focal axis (FP) thereof, the bases of the bars being disposed so that straight lines tangent to the lateral edges (27, 28) of the petals, in the deployed configuration, pass between the bars.

5. Opto-mechanical system according to one of claims 1 to 4, further including nanometer positioning actuators (4, 7) disposed in the primary platforms and in the secondary platform for adjusting the orientation and position of each of the petals (2) and of the secondary mirror (5).

6. Opto-mechanical system according to claim 5, wherein the nanometer positioning actuators of each of the petals (2) are comprised of at least three linear nanometer actuators (4a, 4b, 4c) bearing on the rear face (21) of said petal and the nanometer positioning actuators of the secondary mirror are comprised of at least three linear nanometer actuators (7) bearing on the rear face of the secondary mirror.

7. Opto-mechanical system according to one of claims 1 to 6, **characterized in that** it includes:
- deployment devices (301, 302) for deploying the petals (2) and/or the secondary mirror (5) between the folded storage configuration thereof and the deployed operating configuration thereof, and
- devices for locking in the operating deployed configuration.

8. Observation satellite including an opto-mechanical system according to one of claims 1 to 7.
